# EUROPEAN PATENT APPLICATION

(11) **EP 4 545 773 A1**
(43) Date of publication of application: **30.04.2025**
(21) Application number: 23315396.4
(22) Date of filing: 24.10.2023
(51) Int. Cl.: F02C 7/06, F02C 7/28, F01D 11/04, F02C 7/18

(54) **METHOD FOR OPERATING A TURBO MACHINE AND CORRESPONDING SYSTEM**

(71) Applicant: Cryostar SAS, 68220 Hesingue (FR)
(72) Inventor: Daval, Thomas, 68220 Hesingue (FR)
(74) Representative: Reuß, Stephanie

(57) **Abstract**

The invention relates to a method for operating a turbo machine (102), wherein the turbo machine comprises an expander side (110) having an expander inlet (112), an expander outlet (114) and an expander impeller (116), and a compressor side (120) having a compressor inlet (122), a compressor outlet (124) and compressor impeller (126), wherein the turbo machine further comprises a shaft (130) and a bearing (140, 142), wherein the expander impeller and the compressor impeller are arranged on and connected to each other via the shaft, and wherein the shaft is supported by the bearing, wherein a compressor process gas (b) is provided to the compressor inlet to be compressed, and an expander process gas (A) is provided to the expander inlet to be expanded, wherein a seal gas is provided, as a seal gas stream (c), to the bearing (140, 142) for sealing the bearing, wherein gas, after having been used or processed in the turbo machine is used, as a heat gas stream (e), to heat the seal gas stream. The invention also relates to a corresponding system (100).

## Description

The present invention relates to a method for operating a turbo machine comprising an expander side and a compressor side, and to a corresponding system.

### Background

Turbo machines can be used in different applications. For example, in cryogenic applications, i.e. applications with process gases at cryogenic temperatures, e.g., plants for air separation or the like, cryogenic turbo machines like turbo expanders and/or compressors are often used. Such turbo machines typically comprise an expander impeller and/or a compressor impeller, which are fixed on a shaft.

Such turbo machines typically also comprise an inlet or inlet channel at an expansion side configured to guide operating fluid, e.g., gas like the mentioned process gas, to such impeller, and an outlet or outlet channel configured to guide said operating fluid, e.g., after expansion, from that impeller, e.g., to the outside. Similarly, such turbo machines can comprise an inlet or inlet channel and an outlet or outlet channel at a compression side.

A bearing of such turbo machine, e.g., a magnetic bearing, is typically supplied with a seal gas in order to seal the bearing during operation; this is required in order to prevent the bearing from getting too cold during operation if cold or cryogenic process fluids are used. This can require high energy. In addition, part of the mentioned process gas at the expander side can be used, at least in part, as the seal gas. In such case, the seal gas is typically rather cold and has to be heated before being provided to the bearing. This also can require high energy.

Thus, an object of the present invention is to provide a way to improve energy efficiency for turbo machines.

### Disclosure of the invention

This object is achieved by providing a method for operating a turbo machine and a corresponding system with the features of the independent claims. Embodiments of the invention are the subject of the dependent claims and of the description that follows.

The invention relates to turbo machines, in particular cryogenic turbo machines, wherein the turbo machine comprises an expander side having a compressor inlet, an expander outlet and an expander impeller, and a compressor side having a compressor inlet, a compressor out and compressor impeller. In addition, such turbo machine comprises a shaft and a bearing, wherein the expander impeller and the compressor impeller are arranged on and connected to each other via the shaft, and wherein the shaft is supported by the bearing. Typically, the turbo machine also comprises a housing or housing parts, preferably, comprising an expander housing, a compressor housing and a bearing housing.

An operating or process gas is provided to the compressor inlet to be compressed via the compressor impeller (also called compressor process gas in the following), and operating or process gas is provided to the expander inlet to be expanded by the expander impeller (also called expander process gas in the following). The compressed gas is then provided at the compressor outlet, and the expanded gas is provided at the expander outlet. Note that both process gases can be of the same or of different type of gas. Types of turbomachines are, for example, centrifugal turbo machines and radial turbo machines.

Cryogenic turbo machines, for example, are used with operating fluid like gases or process gases (or fluids or process fluids) at cryogenic temperatures, i.e., very low temperatures of, e.g., less than -100°C or even down to -230°C or -250°C at the expander outlet or at the compressor inlet.

Further, a seal gas is provided, as a seal gas stream, to the bearing for sealing the bearing. Preferably, a part of the expander process gas is branched off to be used as at least part of the seal gas stream, before the expander process gas is provided to the expander inlet. For example, such seal gas can taken from expander inlet to be injected in the labyrinths behind the expander impeller. Usually in these applications, the gas is quite cold and need to be warmed up above its dewpoint to avoid condensation and liquid injection into the labyrinth seals. To do so, an electrical seal gas heater can be used; its consumption can vary from few kilowatts to hundreds of kilowatts in power and it can be regulated with a thyristor control panel, for example.

Further, in an embodiment, a cooling gas is provided to the bearing for cooling the bearing. Preferably, a part of the compressor process gas is branched off at the compressor outlet, to be used as the cooling gas. Usually, such cooling gas is, after having been taken from the compressor outlet and used to cool to the bearings, is then reinjected in the compressor inlet.

It has now turned out that the seal gas stream can be heated by using gas, after having been used or processed in the turbo machine, as a heat gas stream. In an embodiment, the heat gas stream is guided through a heat exchanger to heat the seal gas stream, i.e., the heat gas stream is used as heating means in the heat exchanger. Such heat exchanger can be of usual type, e.g., of tubular or plate type. In this way, the heating of the seal gas stream can be made more efficient and less additional heating energy is required. An additional heater for heating the seal gas stream can be avoided or at least be made smaller with less energy consumption or operated at reduced times.

The necessity to have electrical heater on skid, what can sometimes be inconvenient for the end user, not only due to the electricity consumption but also because of the need to be connected to MCC (Motor Control Center) and add power cables, is avoided or at least reduced.

In an embodiment, a part of the compressor process gas is branched off at the compressor outlet, to be used as at least part of said heat gas stream. In another embodiment, at least a part of the cooling gas, after having cooled the bearing, is used as at least a part of the heat gas stream. As mentioned before, this cooling gas can also be branched off at the compressor outlet. In this way, process gas after having been compressed is used to heat the seal gas stream, be it with or without using this branched off process gas for cooling the bearing. It is noted that both variants can also be combined.

In an embodiment, after having been used to heat the seal gas stream, the heat gas stream is provided to said compressor inlet. In other words, the seal gas can be routed back to the compressor side where it has previously been branched off, for example.

In an embodiment, for start-up and/or shut-down of the turbo-machine, warm seal gas is provided to the bearing as the seal gas stream; alternatively, an external heater is used to heat the seal gas stream for start-up and/or shut-down; further alternatively, the bearing is heated for start-up and/or shut-down. If required or so desired, two or all three of these variants can be combined. Such external heater can, thus, be provided and used if other possibilities to sufficiently heat the seal gas stream or bearing, in particular for start-up and/or shut-down, is not available.

In an embodiment, the bearing is a magnetic bearing, preferably, an active magnetic bearing. Such types of bearings require particular cooling.

To sum up, if a warm seal gas source is available for start-up and shutdown of the turbo machine, e.g., a tapping can be made at compressor outlet and a pipe added to a gas/gas heat exchanger located on seal gas line, to warm the seal gas coming from the expander inlet after the start-up of the turbo machine. Then cold gas can be reinjected at the compressor inlet. Flow control can be done with a locked in position valve before the heat exchanger giving the right flow to warm the seal gas to the wanted value. A size of the pipes, valves and exchanger can be evaluated during detailed engineering depending on the cases, gas composition and pressure and temperature.

The same configuration as before can be used, but with a tapping being made at cooling gas outlet piping and then being routed back to the compressor inlet.

If a warm seal gas source is not available for start-up and shutdown of the turbo machine, a heater, e.g., an electrical heater can be used. Usually, it is used continuously during normal operation to warm the seal gas. To reduce the consumption and even stop the heater during normal operation, a tapping can be made at the compressor outlet and a pipe added to a gas/gas heat exchanger located on seal gas line just after the heater, to warm the seal gas coming from the expander inlet after the start-up of the turbo machine. Then cold gas can be reinjected at the compressor inlet. Flow control will be done with a locked in position valve before the heat exchanger giving the right flow to warm the seal gas to the wanted value. A size of the pipes, valves and exchanger can be evaluated during detailed engineering depending on the cases, gas composition and pressure and temperature.

The shutdown or reduction of the heater consumption can be driven through the measurement of a temperature on a seal gas line after the pressure control valve (PDCV). When the compressor runs in normal operation, the temperature of the seal gas will increase due to both action of heater and gas/gas heat exchanger, then to maintain the temperature, power to electrical heater can be reduced and eventually stopped depending on the gas composition and temperature.

The same configuration as before can be used, but with a tapping being made at cooling gas outlet piping and then being routed back to the compressor inlet.

Further advantages and embodiments of the invention will be apparent from the description and the accompanying drawing. The invention is illustrated schematically by means of embodiments in the drawing and is described below with reference to the drawing.

### Short description of the figures

- Fig. 1: illustrates a system with a turbo machine according to an embodiment of the invention;
- Fig. 2: illustrates a system with a turbo machine according to another embodiment of the invention;
- Fig. 3: illustrates a system with a turbo machine according to another embodiment of the invention; and
- Fig. 4: illustrates a system with a turbo machine according to another embodiment of the invention.

### Detailed description of the figures

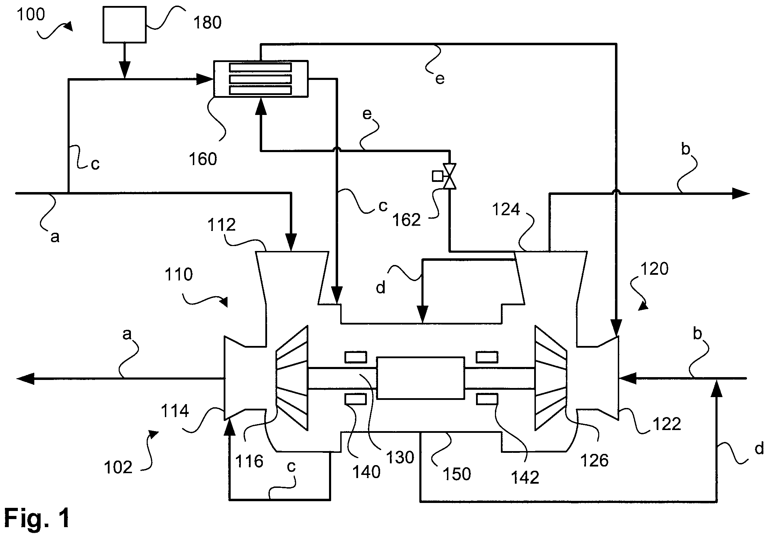

Fig. 1 schematically illustrates a system 100 with a turbo machine 102 according to an embodiment of the invention. The turbo machine 102, e.g., a cryogenic turbo machine is configured as a compressor and an expander, i.e., both are combined in one turbo machine. Thus, the turbo machine 102 has an expander side 110 and a compressor side 120.

Turbo machine 102 comprises, hence, an expander inlet 112 and an expander outlet 114 at the expander side 110, and a compressor inlet 122 and a compressor outlet 124 at the compressor side 120. Further, the turbo machine 102 comprises two impellers, an expander impeller 116 and a compressor impeller 126, both mounted on a shaft 130 of the turbo machine 102.

Further, the turbo machine 102 comprises bearings 140, 142 configured to support the shaft 130. In addition, a housing 150 of the turbo machine 102 is shown, enclosing, e.g., the bearing, the shaft and the impellers. These bearings 140, 142 can be active magnetic bearings. These induvial bearings 140, 142 can, in general, referred to as a bearing of the turbo machine.

An expander process gas a, i.e., a process gas or operating fluid to be expanded, is provided to the expander inlet 112 to be expanded; after expansion, the expander process gas a is guided from the turbo machine at the expander outlet 114. A compressor process gas b, i.e., a process gas or operating fluid to be compressed, is provided to the compressor inlet 122 to be compressed; after compression, the compressor process gas b is guided from the turbo machine at the compressor outlet 124. The inlets 112, 122 and the outlets 114, 124 can, for example, be configured or formed as channels so as to guide the respective process gas to and from the respective impeller.

The process gas or operating fluid to be compressed and the process gas or operating fluid to be expanded can have identical or can have different properties like pressure, temperature, chemical composition etc.

Further, a part of the expander process gas a is branched off and used as seal gas within a seal gas stream c, which is then provided to the bearing 140 for sealing the bearing 140. In particular, the seal gas stream c can be provided into labyrinths behind the expander impeller 116 within the housing 150. After having used for sealing the bearing, the seal gas stream c can be guided from the housing 150.

Further, a part of the compressor process gas b is branched off at the compressor outlet 124, to be used as a cooling gas within a cooling gas stream d; this cooling gas stream d is provided to the bearing 140, 142, inside the housing 150 to cool the bearing. After having cooled the bearing, the cooling gas stream d can be guided from the housing 150.

Further, the system 100 comprises a heat exchanger 160 which is used to heat the seal gas stream c in that the seal gas stream c is guided through the heat exchanger 160.

Further, a part of the compressor process gas b is branched off at the compressor outlet 124, to be used as at least part of the heat gas stream e. A valve 162 can be used to control flow to provide the right or desired flow to warm the seal gas to a wanted value. A heat gas stream e is provided as heating means (or heating medium) in the heat exchanger 160.After heating the seal gas stream c, the heat gas stream e is provided to the compressor inlet 122, i.e., this gas is then again compressed.

In this way, heat generated during compression can be used, via the heat gas stream e, to heat the seal gas stream c. For start-up and/or shut-down of the turbo machine 102, a separate warm seal gas stream from an external warm seal gas source 180 can be used, for example.

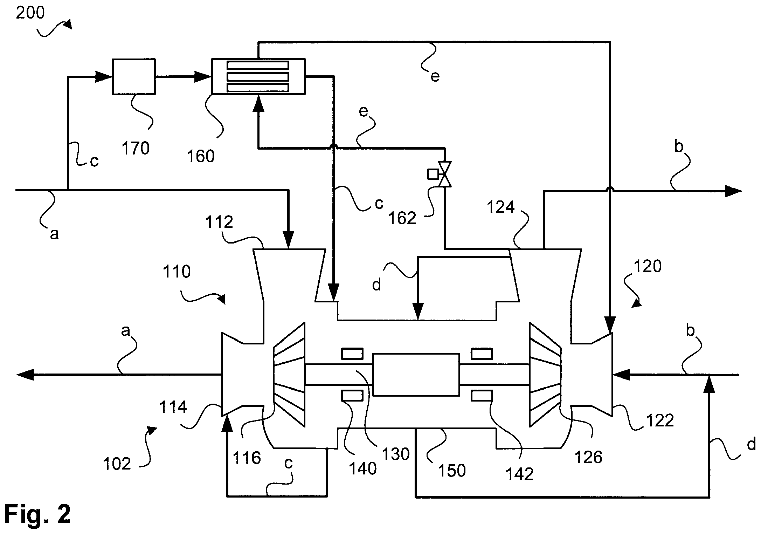

Fig. 2 schematically illustrates a system 200 with a turbo machine 102 according to another embodiment of the invention. The turbo machine 102 can, at least basically, correspond to turbo machine 102 according to system 100 of Fig. 1. In addition, the same or a similar flow of gases is used. Thus, it is referred to Fig. 1 and the corresponding explanations.

In addition, system 200 comprises an external heater 170 that can be used, if necessary, to heat the seal gas stream c, e.g., for start-up and/or shut-down of the turbo machine 102. The seal gas stream c can be guided through the heater 170; in times when the heater 170 is not operated, the seal gas stream c is just guided through without being heated; rather, the seal gas stream is heated via the heat gas stream e and the heat exchanger 160.

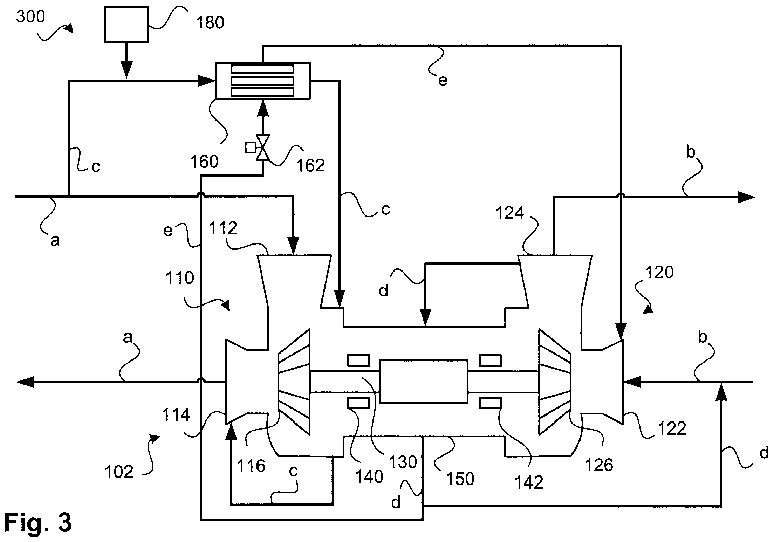

Fig. 3 schematically illustrates a system 300 with a turbo machine 102 according to another embodiment of the invention. The turbo machine 102 can, at least basically, correspond to turbo machine 102 according to system 100 of Fig. 1. In addition, the same or a similar flow of gases is used. Thus, it is referred to Fig. 1 and the corresponding explanations.

Contrary to system 100 in Fig. 1, however, the heat gas stream is not obtained via (directly) branching off part of the compression process gas b at the compressor outlet 124. Rather, at least a part of the cooling gas d, after having cooled the bearing, is used as the heat gas stream e. In this way, the part branched off the compressor processing gas is first used for cooling the bearing and then used for heating the seal gas stream e.

It is noted that this variant can be used in combination with that of system 100, i.e., part of the compression process gas b branched off at the compressor outlet can directly be guided to the heat exchanger 160, and another part can first be used as cooling gas d and then be combined with the other part such as to enter the heat exchanger 160 together.

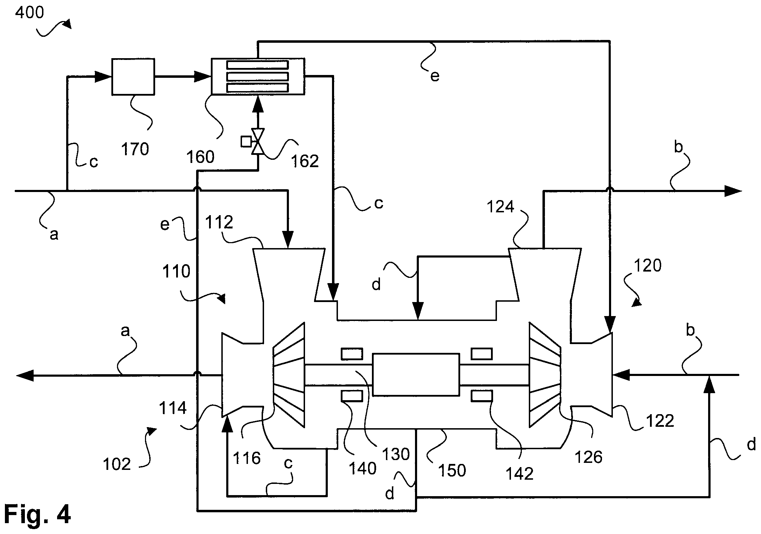

Fig. 4 schematically illustrates a system 400 with a turbo machine 102 according to another embodiment of the invention. The turbo machine 102 can, at least basically, correspond to turbo machine 102 according to system 300 of Fig. 3. In addition, the same or a similar flow of gases is used. Thus, it is referred to Figs. 1 and 3 and the corresponding explanations.

In addition, system 400 comprises an external heater 170 that can be used, if necessary, to heat the seal gas stream c, e.g., for start-up and/or shut-down of the turbo machine 102. The seal gas stream c can be guided through the heater 170; in times when the heater 170 is not operated, the seal gas stream c is just guided through without being heated; rather, the seal gas stream is heated via the heat gas stream e and the heat exchanger 160.

Thus, with respect to where the heat gas stream e is obtained, system 400 corresponds to system 300 but with respect to the external heater, system 400 corresponds to system 200.

Again, it is noted that this variant can be used in combination with that of system 300, i.e., part of the compression process gas b branched off at the compressor outlet can directly be guided to the heat exchanger 160, and another part can first be used as cooling gas d and then be combined with the other part such as to enter the heat exchanger 160 together.

## Claims

1. A method for operating a turbo machine (102), wherein the turbo machine comprises an expander side (110) having an expander inlet (112), an expander outlet (114) and an expander impeller (116), and a compressor side (120) having a compressor inlet (122), a compressor outlet (124) and compressor impeller (126),
wherein the turbo machine further comprises a shaft (130) and a bearing (140, 142), wherein the expander impeller and the compressor impeller are arranged on and connected to each other via the shaft, and wherein the shaft is supported by the bearing,
wherein a compressor process gas (b) is provided to the compressor inlet to be compressed, and an expander process gas (A) is provided to the expander inlet to be expanded,
wherein a seal gas is provided, as a seal gas stream (c), to the bearing (140, 142) for sealing the bearing,
wherein gas, after having been used or processed in the turbo machine, is used, as a heat gas stream (e), to heat the seal gas stream.

2. The method of claim 1, wherein a part of the compressor process gas (b) is branched off at the compressor outlet (124), to be used as at least part of said heat gas stream (e).

3. The method of claim 1 or 2, wherein a cooling gas (d) is provided to the bearing for cooling the bearing, and
wherein, at least a part of the cooling gas (d), after having cooled the bearing, is used as at least a part of the heat gas stream (e).

4. The method of claim 3, wherein a part of the compressor process gas (b) is branched off at the compressor outlet (124), to be used as the cooling gas (d).

5. The method of any one of the preceding claims, wherein, after having been used to heat the seal gas stream, the heat gas stream (e) is provided to the compressor inlet (122).

6. The method of any one of the preceding claims, wherein a part of the expander process gas (a) is branched off to be used as at least part of the seal gas stream (c), before the expander process gas is provided to the expander inlet. (112)

7. The method of any one of the preceding claims, wherein the heat gas stream is guided through a heat exchanger (160) to heat the seal gas stream (c).

8. The method of any one of the preceding claims, wherein, for start-up and/or shut-down of the turbo-machine:
- warm seal gas is provided to the bearing as the seal gas stream, or
- an external heater is used to heat the seal gas stream, or
- the bearing is heated.

9. The method of any one of the preceding claims, wherein the bearing is a magnetic bearing, preferably, an active magnetic bearing.

10. A system (100, 200, 300, 400) comprising a turbo machine (102), wherein the turbo machine comprises an expander side (110) having a compressor inlet (112), an expander outlet (114) and an expander impeller (116), a compressor side (120) having a compressor inlet (122), a compressor outlet (124) and compressor impeller (126),
wherein the turbo machine further comprises a shaft and a bearing, wherein the expander impeller and the compressor impeller are arranged on and connected to each other via the shaft, and wherein the shaft is supported by the bearing,
wherein the system is configured to provide a compressor process gas at the compressor inlet to be compressed, and to provide an expander process gas at the expander inlet to be expanded,
wherein the system is configured to provide a seal gas, as a seal gas stream, to the bearing for sealing the bearing, and
wherein the system is further configured to use gas, after having been used or processed in the turbo machine is used, as a heat gas stream, to heat the first seal gas stream

11. The system of claim 10, further configured to branch off a part of the compressor process gas at the compressor outlet, to be used as at least part of said heat gas stream.

12. The system of claim 10 or 11, further configured to provide a cooling gas to the bearing for cooling the bearing, and to use at least a part of the cooling gas, after having cooled the bearing, as at least a part of the heat gas stream,
wherein, preferably, the system is further configured to branch off a part of the compressor process gas at the compressor outlet, to be used as the cooling gas.

13. The system of any one of claims 10 to 12, further comprising a heat exchanger, wherein the system is configured to guide the heat gas stream through the heat exchanger to heat the seal gas stream,

14. The system of any one of claims 10 to 13, further configured to, for start-up of the turbo-machine:
- provide warm seal gas to said bearing as the seal gas stream, or
- use an external heater of the system to heat the seal gas stream, or
- heat the bearing.

15. The system of any one of claims 10 to 14, further configured to perform the method of any one of claims 1 to 9.
